# DEMANDE DE BREVET EUROPEEN

(11) **EP 4 778 777 A1**
(43) Date de publication de la demande: **22.07.2026**
(21) Numéro de dépôt: 26151899.7
(22) Date de dépôt: 14.01.2026
(51) Int. Cl.: B60N 2/02, B60N 2/24, B60N 2/30, B60N 2/876, B60N 2/90, E05B 77/46, B60R 21/02, E05B 77/22

(54) **DISPOSITIF ARTICULÉ POUR UNE CABINE DE VÉHICULE AUTOMOBILE**

(30) Priorité: 16.01.2025 FR 2500446
(71) Demandeur: Renault s.a.s, 92100 Boulogne Billancourt (FR)
(72) Inventeur: TRAN, Paul, 78640 VILLIERS-SAINT-FREDERIC (FR)

(57) **Abrégé**

Dispositif articulé (10) configuré pour servir de séparation entre un poste de pilotage du véhicule (1) et une zone de chargement, le dispositif articulé (10) comportant une banquette (11) comprenant un bloc d'assise (13) et un dossier (14), le dispositif articulé (10) étant mobile entre une position déployée de façon à accueillir un passager, et une position escamotée de sorte à augmenter un volume de la zone de chargement, le dispositif articulé (10) étant caractérisé en ce qu'il comprend un capteur (15) configuré pour détecter la position dans laquelle se situe ledit dispositif articulé (10) et configuré pour interagir avec un dispositif de verrouillage des portes du véhicule (1) de sorte à verrouiller lesdites portes lorsque le dispositif articulé (10) est dans sa position escamotée et/ou de sorte à déverrouiller lesdites portes lorsque le dispositif articulé (10) est dans sa position déployée.

## Description

L'invention concerne un dispositif articulé pour une cabine de véhicule automobile. L'invention concerne également un véhicule automobile équipé d'un tel dispositif articulé. L'invention concerne en outre une utilisation d'un tel dispositif articulé.

La polyvalence d'un véhicule automobile est importante aux yeux de son utilisateur, notamment en ce qui concerne la place disponible pour transporter des passagers et/ou de la marchandise. Il existe divers systèmes permettant de moduler une zone de chargement d'un véhicule automobile. Il existe par exemple des dispositifs articulés permettant de replier une banquette arrière d'un véhicule automobile pour agrandir l'espace d'une zone de chargement. Ces dispositifs permettent donc d'offrir soit au moins une place assise sous forme de siège pour un passage dans une configuration dépliée, soit une zone de chargement plus grande lorsque le siège est dans une configuration repliée ou rabattue.

Généralement, les véhicules équipés de ce type de dispositif articulé comprennent également des zones d'accès telles que des portes latérales qui permettent à un passage d'accéder à la cabine (également appelée « habitacle ») afin de s'installer sur un siège ou sur une banquette en configuration dépliée. Ceci peut s'avérer problématique dans le cas où les portes du véhicule sont déverrouillées alors que le siège ou la banquette est repliée pour agrandir la zone de chargement, où il serait préférable que les portes donnant accès à la zone de chargement soient toutes verrouillées simultanément.

Le but de l'invention est de remédier aux inconvénients décrits ci-dessus en proposant une solution qui permet de verrouiller automatiquement les portes du véhicule automobile en fonction de la position dans laquelle se trouve le dispositif articulé.

A cet effet, l'invention porte sur un dispositif articulé pour une cabine de véhicule automobile, le dispositif articulé étant configuré pour servir de séparation entre un poste de pilotage du véhicule automobile et une zone de chargement dudit véhicule automobile, le dispositif articulé comportant une banquette comprenant un bloc d'assise et un dossier, le dispositif articulé étant mobile entre une position déployée dans laquelle le bloc d'assise et le dossier de la banquette sont sensiblement perpendiculaires entre eux de façon à accueillir un passager, et une position escamotée dans laquelle le bloc d'assise et le dossier de la banquette sont sensiblement parallèles entre eux et agencés de sorte à augmenter un volume de la zone de chargement, le dispositif articulé étant caractérisé en ce qu'il comprend au moins un capteur configuré pour détecter la position dans laquelle se situe ledit dispositif articulé et configuré pour interagir avec un dispositif de verrouillage des portes du véhicule de sorte à verrouiller lesdites portes lorsque le dispositif articulé est dans sa position escamotée et/ou de sorte à déverrouiller lesdites portes lorsque le dispositif articulé est dans sa position déployée.

Selon un mode de réalisation, lorsque le dispositif articulé adopte sa position escamotée, le dossier de la banquette est replié sur le bloc d'assise de la banquette.

Selon un mode de réalisation, lorsque le dispositif articulé adopte sa position escamotée, le dossier de la banquette est étendu par rapport au bloc d'assise de la banquette.

Selon un mode de réalisation, le au moins un capteur est un capteur de contact et/ou un capteur magnétique et/ou un capteur de pression et/ou un capteur de position et/ou un capteur d'images.

Selon un mode de réalisation, le au moins un capteur est agencé sur une articulation située entre le bloc d'assise de la banquette et un plancher de la cabine du véhicule automobile.

Selon un mode de réalisation, le au moins un capteur est agencé sur une articulation située entre le dossier de la banquette et le bloc d'assise de la banquette.

Selon un mode de réalisation, le au moins un capteur est agencé sur le dossier de la banquette et/ou sur le bloc d'assise de la banquette.

Selon un mode de réalisation, le dispositif articulé comprend une cloison liée à la banquette et le au moins un capteur est agencé sur une articulation située entre la cloison et le dossier de la banquette.

Selon un mode de réalisation, le dispositif articulé comprend une cloison destinée à être liée à un pavillon de la cabine du véhicule automobile le au moins un capteur est agencé sur une articulation située entre la cloison et le pavillon de la cabine du véhicule automobile.

Selon un mode de réalisation, la cloison comprend deux panneaux mobiles l'un par rapport à l'autre et reliés entre eux par une articulation, et le capteur est agencé sur l'articulation entre les deux panneaux mobiles de la cloison.

Selon un mode de réalisation, le dispositif d'articulation comprend un système de verrouillage configuré pour maintenir le dispositif articulé dans sa position déployée et/ou dans sa position escamotée et le capteur coopère avec ledit système de verrouillage.

L'invention porte également sur un véhicule automobile caractérisé en ce qu'il comprend un dispositif articulé tel que décrit précédemment, au moins une porte et un dispositif de verrouillage automatique de la porte, le dispositif de verrouillage automatique de la porte étant configuré pour verrouiller automatiquement la porte lorsque le capteur du dispositif articulé détecte une position escamotée du dispositif articulé et/ou configuré pour déverrouiller automatiquement la porte lorsque le capteur détecte une position déployée du dispositif articulé.

L'invention porte également sur un procédé d'utilisation d'un dispositif articulé tel que décrit précédemment, le procédé comprenant :
- une étape de détection de la position escamotée du dispositif articulé par le capteur, puis
- une étape de verrouillage automatique des portes du véhicule automobile équipé du dispositif articulé.

L'invention porte également sur un procédé d'utilisation d'un dispositif articulé tel que décrit précédemment, le procédé comprenant :
- une étape de détection de la position déployée du dispositif articulé par le capteur, puis
- une étape de déverrouillage automatique des portes du véhicule automobile équipé du dispositif articulé.

Ces objets, caractéristiques et avantages de la présente invention seront exposés en détail dans la description suivante d'un mode de réalisation particulier fait à titre non-limitatif en relation avec les figures jointes parmi lesquelles :
La figure 1 illustre un véhicule automobile équipé d'un dispositif articulé selon un premier mode de réalisation dans une position déployée.
La figure 2 est similaire à la figure 1 et illustre le dispositif articulé de la figure 1 dans une position escamotée.
Les figures 3A, 3B et 3C illustrent les étapes d'un changement de position d'un dispositif articulé selon un deuxième mode de réalisation.
La figure 4 illustre un véhicule automobile équipé d'un dispositif articulé selon un troisième mode de réalisation dans une position déployée.
La figure 5 illustre le dispositif articulé de la figure 4 dans une position escamotée.

Dans cette description, les termes « premier », « deuxième », « troisième », etc. ne visent pas à impliquer ou à créer un ordre particulier des éléments, ni à limiter un élément à un seul élément, sauf indication expresse, par exemple en utilisant les termes « avant », « après », « unique » et d'autres termes de ce type. L'utilisation de ces termes sert plutôt à distinguer les éléments entre eux. À titre d'exemple, un premier élément est distinct d'un deuxième élément, et le premier élément peut englober plus d'un élément et succéder (ou précéder) le deuxième élément dans un ordre d'éléments.

Un trièdre avec trois axes X, Y, Z est illustré sur l'ensemble des figures. Dans ce document, l'axe X désigne l'axe longitudinal du véhicule automobile 1. En marche avant et en ligne droite, le véhicule 1 progresse de l'arrière vers l'avant, selon une direction parallèle à son axe longitudinal. L'axe X est orienté de l'avant vers l'arrière du véhicule 1, c'est-à-dire dans le sens de la marche arrière. L'axe Y désigne l'axe transversal du véhicule 1. L'axe Y est orienté de la gauche vers la droite, la gauche et la droite étant définies selon le point de vue d'un conducteur du véhicule 1. L'axe Z désigne l'axe perpendiculaire à l'axe X et à l'axe Y. On considère que le véhicule 1 repose sur un sol horizontal. L'axe Z est un axe vertical, orienté de bas en haut. Les axes X, Y et Z forment un repère orthogonal. Ce même repère, défini par référence à un véhicule 1, sera aussi utilisé pour décrire un dispositif articulé 10, même considéré hors du véhicule 1, puisque ce dispositif articulé 10 est destiné à un montage selon une orientation spécifique dans le véhicule 1.

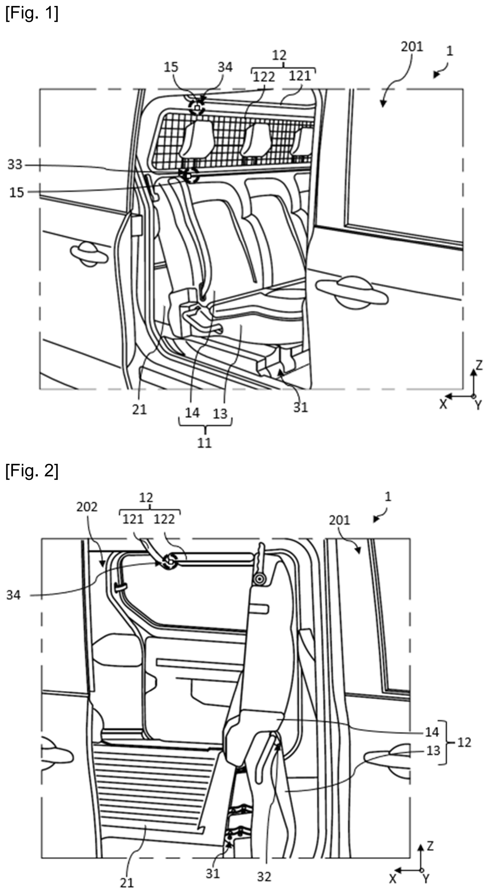

Un véhicule 1 automobile, notamment un véhicule 1 utilitaire, est partiellement illustré sur les figures 1 et 2. Le véhicule 1 comprend une caisse 2 délimitant un volume intérieur du véhicule 1 doté d'un espace avant 201, définissant un espace cabine comportant un poste de pilotage comprenant par exemple un siège conducteur 3, et un espace arrière 202, par exemple une zone de chargement dudit véhicule 1 automobile vouée à l'entreposage de matériel et/ou de marchandises.

Les espaces arrière et avant 202, 201 s'étendent ainsi de préférence verticalement depuis un plancher 21 de la caisse 2 jusqu'à un pavillon 22 de ladite caisse 2. Les espaces arrière et avant 202, 201 s'étendent également de préférence transversalement depuis une première paroi latérale intérieure jusqu'à une deuxième paroi latérale intérieure de la caisse 2.

Le véhicule 1 comprend un dispositif articulé 10 situé dans la cabine du véhicule, à l'arrière du siège conducteur 3. Ce dispositif articulé 10 est configuré pour servir de séparation entre le poste de pilotage du véhicule 1 automobile et la zone de chargement dudit véhicule 1 automobile.

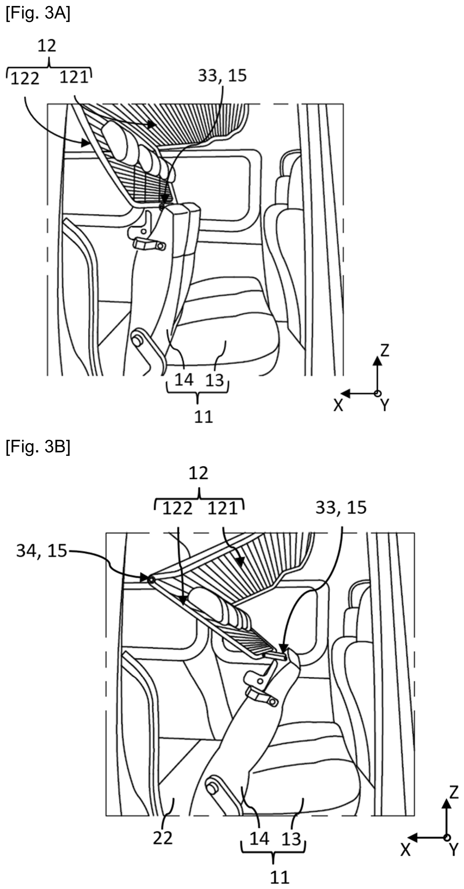

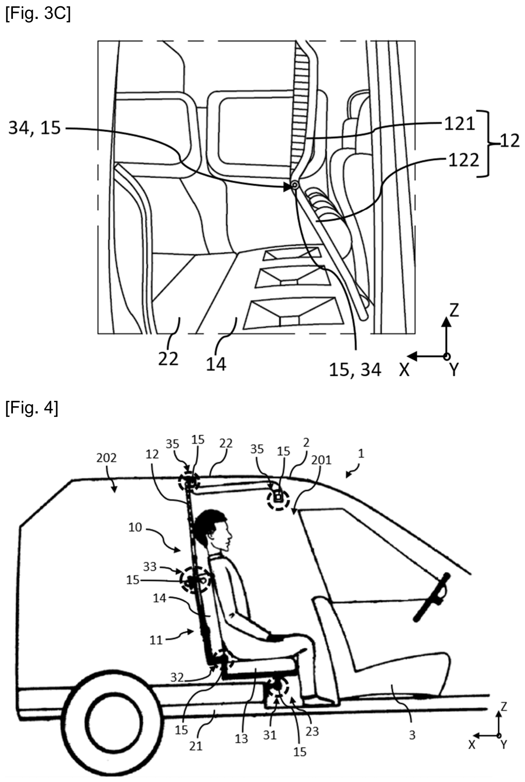

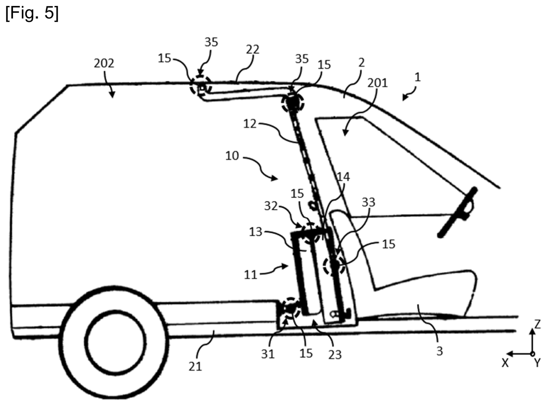

Un premier mode de réalisation d'un tel dispositif articulé 10 est illustré sur les figures 1 et 2. Un deuxième mode de réalisation d'un tel dispositif articulé 10 est illustré sur les figures 3A, 3B et 3C. Un troisième mode de réalisation d'un tel dispositif articulé 10 est illustré sur les figures 4 et 5.

D'une manière commune à tous les modes de réalisation, le dispositif articulé 10 est mobile entre une position déployée, illustrée sur les figures 1, 3A et 4, et une position escamotée, illustrée sur les figures 2, 3C et 5. Les figures 3A, 3B et 3C illustrent les étapes d'un changement de position du dispositif articulé selon le deuxième mode de réalisation : la position déployée du dispositif articulé 10 selon le deuxième mode de réalisation est illustrée sur la figure 3A et la position escamotée du dispositif articulé 10 selon le deuxième mode de réalisation est illustrée sur la figure 3C. La figure 3B illustre une position intermédiaire du dispositif articulé 10 selon le deuxième mode de réalisation.

D'une manière commune à tous les modes de réalisation, le dispositif articulé 10 comprend une banquette 11 qui comprend elle-même un bloc d'assise 13 et un dossier 14. Lorsque le dispositif articulé 10 est dans sa position déployée, le bloc d'assise 13 et le dossier 14 de la banquette 11 sont destinés à accueillir un passager. Dans la position déployée du dispositif articulé 10, le dossier 14 et le bloc d'assise 13 sont sensiblement perpendiculaires entre eux de sorte qu'un passager puisse s'asseoir sur le bloc d'assise 13, son dos contre le dossier 14, comme illustré sur la figure 1.

Lorsque le dispositif articulé 10 se trouve dans sa position déployée, l'espace avant 201, qui définit un espace cabine, comprend alors le poste de pilotage avec le siège conducteur 3 ainsi qu'un siège passager formé par la banquette 11 et le dossier 14, situé derrière le siège conducteur 3. Le volume de l'espace arrière 202 est alors restreint.

Lorsque le dispositif articulé 10 est dans sa position escamotée, le bloc d'assise 13 et le dossier 14 de la banquette 11 sont sensiblement parallèles entre eux et agencés de sorte à augmenter un volume de la zone de chargement du véhicule 1 automobile. L'espace avant 201 est alors plus restreint que lorsque le dispositif articulé 10 se trouve dans sa position déployée, car seul le poste de pilotage avec le siège conducteur 3 est maintenu lorsque le dispositif articulé 10 est dans sa position escamotée. Dans la position escamotée illustrée sur les figures 2, 3C et 5, la banquette 11 est juxtaposé au dossier du siège conducteur 3 et ne permet plus le transport d'un passager. L'espace arrière 202, qui définit une zone de chargement, est ainsi élargi.

Selon le premier mode de réalisation du dispositif articulé 10, lorsque le dispositif articulé 10 adopte sa position escamotée, le dossier 14 de la banquette 11 est étendu par rapport au bloc d'assise 13 de la banquette 11, comme illustré sur la figure 2. Le dossier 14 est alors sensiblement aligné avec l'assise du bloc d'assise 13 de la banquette 11. Le dossier 14 et l'assise du bloc d'assise 13 de la banquette 11 définisse un angle obtus qui peut notamment être compris entre 135° et 180°, voir être supérieur à 180°.

Dans les cas du deuxième mode de réalisation et du troisième mode de réalisation du dispositif articulé 10, lorsque le dispositif articulé 10 adopte sa position escamotée, le dossier 14 de la banquette 11 est replié sur le bloc d'assise 13 de la banquette 11, comme illustré sur la figure 5 et sur la figure 3C. Le dossier 14 et l'assise du bloc d'assise 13 de la banquette 11 définissent alors un angle aigu qui peut notamment être compris entre 0° et 30°, il est par exemple égal à 15°, voire égale à 10°.

Afin de permettre une mobilité du dossier 14 par rapport au bloc d'assise 13 de la banquette 11 une articulation 32 est située entre le dossier 14 et le bloc d'assise 13. Cette articulation 32 peut s'apparenter à une liaison pivot qui permet alors soit de déplier le dossier 14 par rapport au bloc d'assise 13 pour étendre le dossier 14 par rapport au bloc d'assise 13, conformément au premier mode de réalisation, soit de replier le dossier 14 de la banquette 11 sur le bloc d'assise 13 et la banquette 11 par un mouvement de pivotement.

D'une manière commune au premier et au troisième modes de réalisation du dispositif articulé 10, une articulation 31 située entre le bloc d'assise 13 de la banquette 11 et un plancher 21 de la cabine du véhicule 1 automobile peut permettre de basculer vers l'avant l'ensemble formé par le bloc d'assise 13 et le dossier 14. Divers types d'articulations peuvent être envisagés pour lier le bloc d'assise 13 de la banquette 11 au plancher 21 de la cabine du véhicule automobile 1. L'articulation 31 située entre le bloc d'assise 13 et le plancher 21 peut notamment s'apparenter à une liaison pivot. Optionnellement, l'articulation 31 située entre le bloc d'assise 13 de la banquette 11 et le plancher 21 peut être démontable, de sorte à pouvoir retirer la banquette 11 de la cabine, voire retirer le dispositif articulé 10 dans son intégralité.

Dans les cas du deuxième et du troisième modes de réalisation, le dossier 14 et le bloc d'assise 13 de la banquette 11 du dispositif articulé 10 peuvent être configurés de sorte que dans la position escamotée du dispositif articulé 10, l'ensemble formé par le dossier 14 replié sur le bloc d'assise 13 est au moins partiellement intégré dans un logement 23 du plancher 21 prévu à cette effet. Dans le mode de réalisation illustré sur la figure 3C, le dossier 14 de la banquette 11 du dispositif articulé 10 est affleurant avec le plancher 21 du véhicule 1 automobile, maximisant ainsi le volume de l'espace arrière 202.

D'une manière commune à tous les modes de réalisation, le dispositif articulé 10 comprend un capteur 15 configuré pour détecter la position dans laquelle se situe le dispositif articulé 10. Le capteur 15 peut par exemple comprendre une came configuré pour distinguer la position escamotée du dispositif articulé 10 de sa position déployée.

Le capteur 15 peut en outre être configuré pour distinguer la position escamotée et la position déployée du dispositif articulé 10 comme étant les deux positions extrémales, et différencier ces positions extrémales de toutes les autres positions intermédiaires adoptées par le dispositif articulé 10 lors d'un changement de position.

Le capteur 15 du dispositif articulé 10 est également configuré pour interagir avec un dispositif de verrouillage des portes du véhicule 1 donnant accès à l'espace arrière 202, en particulier à la zone de chargement. Le capteur 15 peut par exemple collaborer avec un module de gestion du dispositif de verrouillage du véhicule 1 automobile. En fonction de la position du dispositif articulé 10 détectée par le capteur 15, le module de gestion du dispositif de verrouillage ordonne le verrouillage ou le déverrouillage des portes du véhicule 1.

Plus précisément, lorsque le capteur 15 détecte que le dispositif articulé 10 est dans sa position escamotée, le capteur 15 interagit avec le dispositif de verrouillage de sorte à verrouiller les portes du véhicule donnant accès à la zone de chargement. Ainsi, lorsque le capteur 15 détecte que le dispositif articulé 10 est dans sa position escamotée, les portes du véhicule 1 donnant accès à l'espace arrière 202, notamment à la zone de chargement, sont automatiquement verrouillées, sécurisant ainsi le matériel et/ou la marchandise entreposé dans cet espace arrière 202 contre de potentiels infractions.

De manière similaire, lorsque le capteur 15 détecte que le dispositif articulé 10 est dans sa position déployée, le capteur 15 interagit avec le dispositif de verrouillage de sorte à déverrouiller les portes du véhicule 1, permettant ainsi à un passager d'entrer dans la cabine afin de prendre place sur la banquette 11, ou de quitter sa place assise sur la banquette 11 afin de sortir de la cabine du véhicule 1.

Ainsi, la position du dispositif articulé 10 définit automatiquement la stratégie d'accès au véhicule 1 automobile, par l'intermédiaire du capteur 15. Toutefois, un utilisateur du véhicule 1 automobile peut modifier la stratégie d'accès de son plein gré : l'utilisateur est en mesure de déverrouiller les portes donnant accès à la zone de chargement, même lorsque le dispositif articulé 10 est dans sa position escamotée. De manière similaire, l'utilisateur est également en mesure de verrouiller ces mêmes portes lorsque le dispositif articulé 10 est dans sa position déployée.

Divers types de capteurs 15 peuvent être envisagés pour le dispositif articulé 10. Le dispositif articulé 10 comprend par exemple un capteur 15 de contact et/ou un capteur 15 magnétique et/ou un capteur 15 de pression et/ou un capteur 15 de position et/ou un capteur 15 d'images. L'on peut toutefois envisager d'utiliser un capteur 15 mécanique et/ou un capteur 15 pneumatique et/ou un capteur 15 électrique, voire d'autres types de capteurs 15.

Selon un mode de réalisation non illustré sur les figures, le capteur 15 est un capteur d'images, tel une caméra. Le capteur 15 est alors configuré pour acquérir des images du dispositif articulé 10. Un tel capteur 15 peut collaborer avec un module de gestion du dispositif de verrouillage du véhicule 1 automobile, le module de gestion est alors configuré pour détecter les positions du dispositif articulé 10 à partir des images acquises par le capteur 15. En particulier, le module de gestion du dispositif de verrouillage peut être configuré pour distinguer la position escamotée du dispositif articulé 10 de sa position déployée. Le module de gestion peut également être configuré pour distinguer ces deux positions extrémales du dispositif articulé 10 de l'ensemble des positions intermédiaires que le dispositif articulé 10 est en mesure d'adopter lors d'un changement de position depuis la position escamotée vers la position déployée ou inversement.

Un tel capteur 15 d'images peut être agencé sur le dispositif articulé 10, ou bien à proximité du dispositif articulé 10, par exemple sur le pavillon 22 ou sur le plancher 21 de la cabine du véhicule automobile 1, ou encore sur l'une des parois latérales intérieures de la caisse 2. Toutefois, un emplacement permettant une capture d'image précise et fiable de la position du dispositif articulé 10 sera favorisée.

Selon un autre mode de réalisation, le capteur 15 est par exemple un capteur de contact. Un tel capteur 15 de contact comprend généralement une partie mobile qui, selon la position adoptée par cette partie mobile, permet d'interrompre ou d'établir un contact électrique par une action mécanique sur ladite partie mobile du capteur 15 de contact. Un tel capteur 15 présente l'avantage d'être compact, économique et fiable. Un tel capteur 15 est aisément intégrable au dispositif articulé 10.

En complément ou alternativement, le au moins un capteur 15 peut être un capteur 15 magnétique et/ou un capteur 15 de pression.

Il est également possible d'envisager un mode de réalisation dans lequel le dispositif articulé 10 comprend plusieurs capteurs 15, de nature similaire ou différente, localisés à divers endroits du dispositif articulé 10. Utiliser plusieurs capteurs 15 indépendants les uns des autres pour le dispositif articulé 10 peut s'avérer plus sécurisant, notamment lorsque l'un des capteurs 15 est défaillant : le ou les autres capteurs 15 peuvent alors continuer à assurer leur fonction.

Divers emplacements peuvent être envisagés pour le ou les capteurs 15 du dispositif articulé 10. De manière général, un capteur 15 agencé sur une articulation 31, 32, 33, 34, 35 entre deux éléments du dispositif articulé 10 présente l'avantage d'être particulièrement compact, discret et fiable dans sa détection de la position du dispositif articulé 10.

Dans les cas du premier et du troisième mode de réalisation du dispositif articulé 10, le capteur 15 peut être agencé sur l'articulation 31 située entre le bloc d'assise 13 de la banquette 11 et le plancher 21 de la cabine du véhicule 1 automobile. Un tel emplacement du capteur 15 est discret et à l'abri d'éléments perturbateurs qui risqueraient de dérégler le capteur 15.

Selon un mode de réalisation complémentaire ou alternatif, le capteur 15 peut être agencé sur l'articulation 32 située entre le dossier 14 de la banquette 11 et le bloc d'assise 13 de la banquette 11. Le capteur 15 est ainsi localisé au cœur du mécanisme qui permet de déplacer le dossier 14 par rapport au bloc d'assise 13 lorsque le dispositif articulé 10 quitte sa position déployée pour adopter sa position escamotée ou inversement. Un tel capteur 15 peut être couplé avec un indicateur visuel qui permet à un utilisateur de vérifier si le dispositif articulé 10 se trouve dans sa position déployée ou dans sa position escamotée, ou dans une position intermédiaire.

Selon un mode de réalisation complémentaire ou alternatif, le capteur 15 peut être agencé sur le dossier 14 et/ou sur le bloc d'assise 13 de la banquette 11.

Selon un mode de réalisation particulier, illustré sur l'ensemble des figures, le dispositif articulé 10 comprend en outre une cloison 12 liée à la banquette 11. Dans ce mode de réalisation, la cloison 12 sert de séparation entre l'espace avant 201 et l'espace arrière 202 du véhicule 1 automobile. Plus particulièrement, la cloison 12 du dispositif articulé 10 sert de séparation entre le poste de pilotage et la zone de chargement du véhicule 1 automobile.

La cloison 12 est notamment liée à la banquette 11, de sorte que lorsque le dispositif articulée 10 est déplacé depuis sa position déployée vers sa position escamotée ou inversement, la cloison 12 est également déplacée. La cloison 12 est par exemple liée au dossier 14 de la banquette 11 par l'intermédiaire d'une articulation 33. Divers types de liaison peuvent être envisagées pour l'articulation 33 entre la cloison 12 et la banquette 11, autorisant une variété de mobilités entre la cloison 12 et la banquette 11. La liaison formée par l'articulation 33 entre la cloison 12 et la banquette 11 peut être démontable, de sorte à permettre une séparation temporaire de la cloison 12 par rapport à la banquette 11.

La cloison 12 peut être disposée de sorte à s'étendre parallèlement, ou sensiblement parallèlement à la direction transversale et dans un plan sensiblement vertical. Particulièrement, la cloison 12 peut s'étendre sur une partie d'une largeur de la caisse 2, mesurée le long de la direction transversale entre les première et deuxième parois latérales intérieures de la caisse 2. La cloison 12 peut être ajourée pour permettre une meilleure visibilité, comme illustré dans la figure 1. Optionnellement, au moins un appui-tête peut être agencé sur la cloison 12, comme illustré sur les figures 1, 3A et 3B.

Selon un mode de réalisation illustré sur les figures 1, 2, 3A, 3B et 3C, la cloison 12 du dispositif articulé 10 comprend deux panneaux 121, 122 distincts qui sont mobiles l'un par rapport à l'autre. Ces panneaux 121, 122 mobiles de la cloison 12 peuvent être reliés entre eux par une articulation 34 permettant de faciliter le changement de position du dispositif articulé 10 entre sa position déployée et sa position escamotée. Une telle articulation 34 entre les panneaux 121, 122 mobiles de la cloison 12 peut s'apparenter à une articulation télescopique et/ou une liaison pivot. D'autres types de liaison peuvent être envisagées.

Dans la cas où la cloison 12 comprend deux panneaux 121, 122 mobiles l'un par rapport à l'autre, reliés entre eux par une articulation 34, le capteur 15 peut être agencé sur cette articulation 34 entre les deux panneaux 121, 122 mobiles de la cloison 12. Selon un mode de réalisation complémentaire ou alternatif, le au moins un capteur 15 peut être agencé sur l'un des deux panneaux 121, 122 de la cloison 12.

Dans ces modes de réalisation, le capteur 15 peut être configuré de sorte à détecter une position angulaire entre les deux les panneaux 121, 122 mobiles de la cloison 12. Le verrouillage et/ou le déverrouillage des portes du véhicule 1 automobile peut alors dépendre de la position angulaire détectée par le capteur 15 entre les deux les panneaux 121, 122 mobiles.

La cloison 12 peut être liée au pavillon 22 de la cabine du véhicule 1 automobile par l'intermédiaire d'une articulation 35. Dans les cas du premier et du deuxième mode de réalisation illustrés sur les figures 1 à 3C, l'articulation 35 s'apparente à une liaison pivot qui permet de basculer au moins une partie de la cloison 12 autour d'un axe de rotation lorsque le dispositif articulé 10 est déplacé depuis sa position déployée vers sa position escamotée ou inversement.

Dans le cas du troisième mode de réalisation illustré sur les figures 4 et 5, l'articulation 35 comprend un moyen de guidage configuré pour guider une extrémité supérieure de la cloison 12 pendant un changement de position du dispositif articulé 10 entre sa position déployée et sa position escamotée. Le moyen de guidage illustré sur les figures 4 et 5 s'apparente à un rail.

Selon un mode de réalisation, le capteur 15 peut être agencé sur l'articulation 35 située entre la cloison 12 et le pavillon 22 de la cabine du véhicule 1 automobile.

Selon un mode de réalisation complémentaire ou alternatif, le capteur 15 peut être agencé sur l'articulation 33 située entre la cloison 12 et le dossier 14 de la banquette 11. Le capteur 15 est ainsi localisé au cœur du mécanisme qui permet d'articuler la cloison 12 par rapport au dossier 14 de la banquette 11. Là encore, le capteur 15 peut être couplé avec un indicateur visuel qui permet à un utilisateur de vérifier si le dispositif articulé 10 se trouve dans sa position déployée ou dans sa position escamotée, ou dans une position intermédiaire.

Selon un mode de réalisation, le dispositif articulé 10 comprend un système de verrouillage (non illustré sur les figures) configuré pour maintenir le dispositif articulé 10 dans sa position déployée et/ou dans sa position escamotée, le capteur 15 coopère alors avec ledit système de verrouillage. Alternativement, deux systèmes de verrouillage distincts peuvent être utilisés, l'un pour verrouiller le dispositif articulé 10 dans sa position déployée, l'autre pour verrouiller le dispositif articulé 10 dans sa position escamotée. Dans ce mode de réalisation, le dispositif articulé 10 peut comprendre deux capteurs 15 distincts, c'est-à-dire un capteur 15 par système de verrouillage.

Dans le cas où le dispositif articulé 10 comprend une cloison 12 liée à la banquette 11, un tel système de verrouillage peut également être utilisé pour maintenir la cloison 12 dans la position qu'elle adopte en fonction de la position déployée ou escamotée du dispositif articulé 10. En complément ou alternativement, un tel système de verrouillage peut également être utilisé pour maintenir le dossier 14 et/ou le bloc d'assise 13 de la banquette 11 dans la position qu'ils adoptent en fonction de la position déployée ou escamotée du dispositif articulé 10. Par ailleurs, un tel système de verrouillage peut lier le dispositif articulé 10 à un autre élément du véhicule 1 automobile, par exemple au plancher 21, au pavillon 22 ou encore à l'une des parois latérales intérieures de la caisse 2.

Le système de verrouillage comprend par exemple un loquet et une gâche, le loquet étant configuré pour interagir avec la gâche de sorte à immobiliser la banquette 11 et/ou la cloison 12 dans la position déployée et/ou dans la position escamotée du dispositif articulé 10. Dans ce mode de réalisation, le capteur 15 détecte la position déployée ou la position escamotée du dispositif articulé que lorsque le loquet et la gâche du système de verrouillage coopère pour maintenir ladite position déployée et/ou escamotée.

Le dispositif articulé 10 est destiné à être monté dans un véhicule 1 automobile. D'une manière générale, un tel véhicule 1 automobile comprend un dispositif articulé 10 selon l'un des modes de réalisation décrits précédemment, il comprend également au moins une porte et un dispositif de verrouillage automatique de la porte. Le dispositif de verrouillage automatique de la porte est alors configuré pour verrouiller automatiquement la porte lorsque le capteur 15 du dispositif articulé 10 détecte une position escamotée du dispositif articulé 10. De manière complémentaire ou alternative, le dispositif de verrouillage automatique de la porte est configuré pour déverrouiller automatiquement la porte lorsque le capteur 15 détecte une position déployée du dispositif articulé 10.

Un procédé d'utilisation d'un dispositif articulé 10 selon l'un des modes de réalisation décrits précédemment et équipant un véhicule 1 automobile comporte une variété d'étapes. Un tel procédé d'utilisation comporte notamment une étape de détection de la position escamotée du dispositif articulé 10 par le capteur 15, puis une étape de verrouillage automatique des portes du véhicule 1 automobile équipé du dispositif articulé 10. Un tel procédé d'utilisation peut également comporter une étape de détection de la position déployée du dispositif articulé 10 par le capteur 15, puis une étape de déverrouillage automatique des portes du véhicule 1 automobile équipé du dispositif articulé.

## Revendications

1. Dispositif articulé (10) pour une cabine de véhicule (1) automobile, le dispositif articulé (10) étant configuré pour servir de séparation entre un poste de pilotage du véhicule (1) automobile et une zone de chargement dudit véhicule (1) automobile, le dispositif articulé (10) comportant une banquette (11) comprenant un bloc d'assise (13) et un dossier (14), le dispositif articulé (10) étant mobile entre une position déployée dans laquelle le bloc d'assise (13) et le dossier (14) de la banquette (11) sont sensiblement perpendiculaires entre eux de façon à accueillir un passager, et une position escamotée dans laquelle le bloc d'assise (13) et le dossier (14) de la banquette (11) sont sensiblement parallèles entre eux et agencés de sorte à augmenter un volume de la zone de chargement, le dispositif articulé (10) étant **caractérisé en ce qu'**il comprend au moins un capteur (15) configuré pour détecter la position dans laquelle se situe ledit dispositif articulé (10) et configuré pour interagir avec un dispositif de verrouillage des portes du véhicule (1) de sorte à verrouiller lesdites portes lorsque le dispositif articulé (10) est dans sa position escamotée et/ou de sorte à déverrouiller lesdites portes lorsque le dispositif articulé (10) est dans sa position déployée.

2. Dispositif articulé (10) selon la revendication précédente, **caractérisé en ce que** lorsque le dispositif articulé (10) adopte sa position escamotée, le dossier (14) de la banquette (11) est replié sur le bloc d'assise (13) de la banquette (11), ou **en ce que** lorsque le dispositif articulé (10) adopte sa position escamotée, le dossier (14) de la banquette (11) est étendu par rapport au bloc d'assise (13) de la banquette (11).

3. Dispositif articulé (10) selon l'une des revendications précédentes, **caractérisé en ce que** le au moins un capteur (15) est un capteur de contact et/ou un capteur magnétique et/ou un capteur de pression et/ou un capteur de position et/ou un capteur d'images.

4. Dispositif articulé (10) selon l'une des revendications précédentes, **caractérisé en ce que** le au moins un capteur (15) est agencé sur une articulation (31) située entre le bloc d'assise (13) de la banquette (11) et un plancher (21) de la cabine du véhicule (1) automobile et/ou **en ce que** le au moins un capteur (15) est agencé sur une articulation (32) située entre le dossier (14) de la banquette (11) et le bloc d'assise (13) de la banquette (11) et/ou **en ce que** le au moins un capteur (15) est agencé sur le dossier (14) et/ou sur le bloc d'assise (13) de la banquette (11).

5. Dispositif articulé (10) selon l'une des revendications précédentes, **caractérisé en ce qu'**il comprend en outre une cloison (12) liée à la banquette (11) et/ou destinée à être liée à un pavillon (22) de la cabine du véhicule (1) automobile et **caractérisé en ce que** le au moins un capteur (15) est agencé sur une articulation (33) située entre la cloison (12) et le dossier (14) de la banquette (11) et/ou **en ce que** le au moins un capteur (15) est agencé sur une articulation (35) située entre la cloison (12) et le pavillon (22) de la cabine du véhicule (1) automobile.

6. Dispositif articulé (10) selon la revendication précédente, **caractérisé en ce que** la cloison (12) comprend deux panneaux mobiles l'un par rapport à l'autre et reliés entre eux par une articulation (34), et **en ce que** le au moins un capteur (15) est agencé sur l'articulation (34) entre les deux panneaux mobiles de la cloison (12).

7. Dispositif articulé (10) selon l'une des revendications précédentes, **caractérisé en ce qu'**il comprend un système de verrouillage configuré pour maintenir le dispositif articulé (10) dans sa position déployée et/ou dans sa position escamotée et **en ce que** le au moins un capteur (15) coopère avec ledit système de verrouillage.

8. Véhicule automobile **caractérisé en ce qu'**il comprend un dispositif articulé (10) selon l'une des revendications précédentes, au moins une porte et un dispositif de verrouillage automatique de la porte, le dispositif de verrouillage automatique de la porte étant configuré pour verrouiller automatiquement la porte lorsque le au moins un capteur (15) du dispositif articulé (10) détecte une position escamotée du dispositif articulé (10) et/ou configuré pour déverrouiller automatiquement la porte lorsque le au moins un capteur (15) détecte une position déployée du dispositif articulé (10).

9. Procédé d'utilisation d'un dispositif articulé (10) selon l'une des revendications 1 à 7, le dispositif articulé (10) étant destiné à équiper un véhicule (1) automobile selon la revendication 8, le procédé comprenant :
- une étape de détection de la position escamotée du dispositif articulé (10) par le au moins un capteur (15), puis
- une étape de verrouillage automatique des portes du véhicule (1) automobile équipé du dispositif articulé (10).

10. Procédé d'utilisation d'un dispositif articulé selon l'une des revendications 1 à 7, le dispositif articulé (10) étant destiné à équiper un véhicule (1) automobile selon la revendication 8, le procédé comprenant :
- une étape de détection de la position déployée du dispositif articulé (10) par le au moins un capteur (15), puis
- une étape de déverrouillage automatique des portes du véhicule (1) automobile équipé du dispositif articulé (10).
